# EUROPEAN PATENT SPECIFICATION

(11) **EP 4 677 040 B1**
(45) Date of publication and mention of the grant of the patent: **09.12.2026**
(21) Application number: 24709094.7
(22) Date of filing: 08.03.2024
(51) Int. Cl.: C09J 153/02, C08K 5/526, C08K 5/5357

(54) **SPRAYABLE PRESSURE SENSITIVE ADHESIVE COMPOSITION WITH IMPROVED FLAME RETARDING PROPERTIES**
SPRÜHBARE DRUCKEMPFINDLICHE KLEBSTOFFZUSAMMENSETZUNG MIT VERBESSERTEN FLAMMHEMMENDEN EIGENSCHAFTEN
COMPOSITION D'ADHÉSIF SENSIBLE À LA PRESSION PULVÉRISABLE AYANT DES PROPRIÉTÉS IGNIFUGES AMÉLIORÉES

(30) Priority: 09.03.2023 EP 23160887
(43) Date of publication of application: 14.01.2026
(73) Proprietor: Sika Technology AG, 6340 Baar (CH)
(72) Inventor: GÜNTHER, Andreas, 21614 Buxtehude (DE); UEDING, Daniel, 25436 Tornesch (DE); ARLT, Claudia, 22527 Hamburg (DE)
(74) Representative: Sika Patent Attorneys
(86) International application number: PCT/EP2024/056159
(87) International publication number: WO 2024/184507

(56) References cited:
- CN-A- 111 849 396
- US-A1- 2008 241 529
- US-A1- 2013 236 718

## Description

### Technical field

The invention relates to pressure sensitive adhesive compositions, particularly pressure sensitive adhesive compositions that are suitable for spray application, and to use of these for bonding of electrical components, especially batteries of electrical vehicles.

### Background of the invention

Pressure sensitive adhesives (PSA) are viscoelastic materials, which adhere immediately to almost any kind of substrates by application of light pressure and which are permanently tacky. Pressure sensitive adhesives that are applied as a melt, also known as hot-melt pressure sensitive adhesives (HM-PSA), have the advantage of having an infinitely long open time, which makes them suitable for bonding of large surfaces with thin adhesive films. These types of adhesives are also suitable for use in lamination application processes involving long waiting times without reactivation of the applied adhesive layer by heating. Due to the permanent tackiness of the adhesive material, preapplied layers of pressure sensitive adhesive are usually covered with a release liner to avoid unwanted bonding and to protect the adhesive layer from fouling.

Pressure sensitive adhesives are polymeric materials, which typically have a limiting oxygen index (LOI) of less than 25%, which makes them flammable or combustible. Flame retardant additives can be added to adhesive compositions to improve their fire resisting/flame retarding properties. Commonly used flame retardants for polymeric materials include inorganic flame retardants, such as metal oxides, metal hydroxides, and clays, for example alumina trihydrate (ATH), precipitated aluminum hydroxides, and magnesium hydroxide. The flame retarding properties of adhesive compositions are especially crucial in bonding of batteries of electric vehicles, where mitigating thermal runaway events is extremely important.

Inorganic flame retardants are typically not well compatible with the polymer matrix of the adhesive and their use, especially at high loading, is likely to cause adverse effects on the adhesive performance. Furthermore, flame retardants that remain solid at the application temperature are generally less suitable for use in adhesive compositions that are applied by spraying. Some inorganic FRs, particularly ATH, are delivered in particle sizes making the spray application impossible.

Halogenated flame retardants, particularly brominated retardants (BRF), are highly effective in achieving the requirements for desired fire classification, but their use is generally not preferred for environmental and safety issues. In fact, the use of brominated flame retardants has already been banned in some applications.

Use of halogen-free flame organic and metal-organic flame retardants has become increasingly popular, mainly due to the regulatory limitations related to use of halogenated compounds. Typically used halogen-free flame retardants for polymeric materials include organophosphorus compounds, such as polyphosphates, phosphonates, phosphinates, phosphoramidates, and phosphonamidites as well as 1,3,5-triazine compounds, such as melamine and melamine salts and adducts, oligomeric and polymeric 1,3,5-triazine compounds, and polyphosphates of 1,3,5-triazine compounds.

For example, US 2008/241529 A1 discloses a flameproofed adhesive containing a thermoplastic polymer and as flameproofing agent at least one phosphinic acid salt or diphosphinic acid salt.

As another example, CN 111 849 396 A discloses a hot melt adhesive composition for spray applications comprising styrene block copolymers, a tackifier and a liquid flame retardant which is an organophosphorus compound.

There is a need for a novel type of pressure sensitive adhesive that can be used in spray applications and exhibits improved flame retarding properties compared to pressure sensitive adhesives of prior art.

### Summary of the invention

The objective of the present invention is to provide pressure sensitive adhesive composition for use in spray applications having improved flame retarding properties, particularly fulfilling the requirements for the V-0 classification of the UL 94V test. Such adhesive compositions are especially suitable for use in automotive applications, particularly for use as an assembly adhesive for electronic vehicle batteries.

Surprisingly, it has been found out that the object can be achieved with the features of claim 1.

Especially, it has been found out that organophosphorus flame retardants having a low melting point, such as below the application temperature, are especially suitable for use in spraying applications mainly since they are well incorporated into the polymer matrix of the adhesive formulation. A compatibilizer can further be used to compensate the certain degree of incompatibility between the organophosphorus compounds and the basic adhesive formulation to maintain high adhesive performance.

The subject of the present invention is a pressure sensitive adhesive composition as defined in claim 1.

Other aspects of the present invention are presented in other independent claims. Preferred embodiments of the invention are presented in the dependent claims.

### Detailed description of the invention

The subject of the present invention is a pressure sensitive adhesive composition comprising:
a) At least one styrene block copolymer **SC,**
b) At least one tackifying resin **TR,**
c) A flame retardant system **FR** comprising:
   c1) At least one first organophosphorus compound **FR1** having a melting temperature of at or below 125 °C
   c2) At least one second organophosphorus compound **FR2** having a melting temperature of at least 150 °C, and
d) Optionally at least one compatibilizer **CO.**

The prefix "poly" in substance designations such as "polyol" or "polyisocyanate" refers to substances which in formal terms contain two or more per molecule of the functional group that occurs in their designation. A polyol, for example, is a compound having two or more hydroxyl groups, and a polyisocyanate is a compound having two or more isocyanate groups.

The term "polymer" designates a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically nonuniform.

The term "molecular weight" refers to the molar mass (g/mol) of a molecule or a part of a molecule, also referred to as "moiety". The term "average molecular weight" refers to number average molecular weight (Mₙ) or weight average molecular weight (M_{w}) of an oligomeric or polymeric mixture of molecules or moieties. The molecular weight can be determined by conventional methods, preferably by gel permeation-chromatography (GPC) using polystyrene as standard, styrene-divinylbenzene gel with porosity of 100 Angstrom, 1000 Angstrom and 10000 Angstrom as the column and depending on the molecule, tetrahydrofurane as a solvent, at 35°C, or 1,2,4-trichlorobenzene as a solvent, at 160°C.

The term "softening point" or "softening temperature" refers to a temperature at which compound softens in a rubber-like state, or a temperature at which the crystalline portion within the compound melts. The softening point can be measured by a Ring and Ball method according to DIN EN 1238:2011 standard.

The term "glass transition temperature" (T_{g}) refers to the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1 %.

The "amount or content of at least one component X" in a composition, for example "the amount of the at least one styrene block copolymer" refers to the sum of the individual amounts of all styrene block copolymers contained in the composition. For example, in case the composition comprises 20 wt.-% of at least one styrene block copolymer, the sum of the amounts of all styrene block copolymers contained in the composition equals 20 wt.-%.

The pressure sensitive adhesive composition comprises as the first compulsory component at least one styrene block copolymer **SC**.

Suitable styrene block copolymers include, particularly, block copolymers containing polystyrene and polybutadiene blocks and/or polyisoprene blocks.

These materials are generally available as pure triblock copolymers, also known as SIS and SBS block copolymers, and as diblock copolymers (SI and SB block copolymers). Furthermore, styrene block copolymers are also commercially available as mixtures of diblock and triblock copolymers. Suitable styrene block copolymers can have a linear, radial, or star structure, the linear structure being especially preferred.

According to one or more embodiments, the at least one styrene block copolymer **SC** comprises at least one styrene isoprene diblock (SI) and/or triblock (SIS) copolymer and/or at least one styrene-butadiene diblock (SB) and/or triblock (SBS) copolymer.

Suitable SI, SIS, SB, and SBS block copolymers are commercially available, for example from TSRC/Dexco under the trade name of Vector^{®}, such as Vector^{®} 4000-series, and from Kraton Polymers under the trade name of Kraton^{®} D-series.

Preferably, the at least one styrene block copolymer **SC** has:
- a polystyrene content of not more than 45 wt.-%, more preferably not more than 40 wt.-% and/or
- a melt flow rate determined according to ASTM D1238 (200 °C/5 kg) of not more than 75 g/10 min, more preferably not more than 50 g/10 min and/or
- a solution viscosity of determined according to ASTM D2196 of not more than 1000 MPa·s, preferably not more than 850 MPa·s.

The term "polystyrene content of a block copolymer" refers here to a weight percentage of styrene or polystyrene in the block copolymer and is based on the total weight of the block copolymer.

The pressure sensitive adhesive further comprises a flame retardant system **FR** comprising:
c1) At least one first organophosphorus compound **FR1** having a melting temperature of at or below 125 °C, preferably at or below 115 °C, more preferably at or below 105 °C and
c2) At least one second organophosphorus compound **FR2** having a melting temperature of at least 150 °C, preferably at least 175 °C, more preferably at least 195 °C.

The melting point of the organophosphorus compounds can be determined, for example, by differential scanning calorimetry (DSC).

According to one or more embodiments, the at least one first organophosphorus compound **FR1** is represented by formula (I): 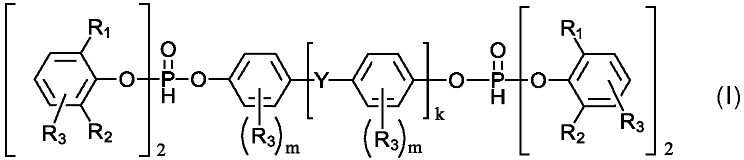
wherein R₁ and R₂ each independently represent an alkyl group having 1 to 5 carbon atoms;
R₃ and R₄ each independently represent a hydrogen atom or an alkyl group having 1 to 5 carbon atoms;
Y represents a bond or a group -CH₂-, -C(CH₃)₂-, -S-, -SO₂-, -O-, -CO- or -N=N-;
k represents 0 or 1; and
m represents an integer of 0 to 4.

The alkyl group having 1 to 5 carbon atoms represented by R₁ and R₂ in the general formula (I) is preferably a linear or branched alkyl group having 1 to 5 carbon atoms, preferably selected from methyl, ethyl, propyl, isopropyl, n-butyl, isobutyl, tert-butyl, n-pentyl, isopentyl and neo-pentyl, wherein methyl group and the ethyl group are particularly preferred.

For the alkyl group having 1 to 5 carbon atoms represented by R₃ and R₄ in the general formula (I), linear or branched alkyl groups having 1 to 5 carbon atoms are preferred, such as methyl, ethyl, propyl, isopropyl, n-butyl, isobutyl, tert-butyl, n-pentyl, isopentyl and neo-pentyl. Preferably, R₃ and R₄ in the general formula (I) represent a hydrogen atom or a methyl group.

Suitable organophosphorus compounds of formula (I) are commercially available, for example, from Daihachi Chemical Industry Co., Ltd. Under the trade name of PX-200.

According to one or more embodiments, the at least one first organophosphorus compound **FR1** is selected from tetrakis(2,6-dimethylphenyl)-m-phenylene-bisphosphate, tetrakis(2,6-dimethylphenyl)-p-phenylene-bisphosphate, and tetrakis (2,6- dimethylphenyl)-4,4'-diphenylenebisphosphate.

Preferably, the amount of the at least one first organophosphorus compound **FR1** makes up not more than 30 wt.-%, especially not more than 25 wt.-%, of the total weight of the pressure sensitive adhesive. The upper limit for the first organophosphorus compound **FR1** is based on a finding that use of overly high amounts of flame retardants having a low melting point results in the flame retardant to crystallize from the polymer matrix of the adhesive composition resulting in significant adverse effect on the adhesive performance.

According to one or more preferred embodiments, the pressure sensitive adhesive composition comprises 2.5 - 20 wt.-%, preferably 5 - 15 wt.-%, more preferably 7.5 - 12.5 wt.-% of the at least one first organophosphorus compound **FR1.**

The flame retardant system **FR** further comprises the at least one second organophosphorus compound **FR2.**

According to one or more embodiments, the at least one second organophosphorus compound **FR2** is a phosphonate of formula (II): 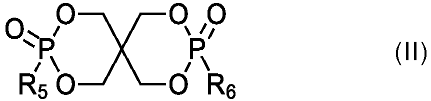 wherein R₅ and R₆ represent, independently from each other, substituted or unsubstituted linear or branched alkyl groups having 1 to 10 carbon atoms or substituted or unsubstituted cycloalkyl or aryl groups.

Suitable organophosphorus compounds of general formula (II) are commercially available, for example, from THOR GmbH under the trade name of Afflammit PCO^{®} series.

According to one or more embodiments, R₅ and R₆ represent, independently from each other, a substituted or unsubstituted linear or branched alkyl group having 1 to 4 carbon atoms, a substituted or unsubstituted benzyl, a substituted or unsubstituted phenyl, or a substituted or unsubstituted naphthyl.

R₅ and R₆ may also represent, independently from each other a halo alkyl group that is substituted with one, two, or three halogen atoms selected from chlorine and bromine, or a phenyl or a halogen-substituted phenyl group, such as 4-chlorophenyl, 2,4-dichlorophenyl, 2,4,6-trichlorophenyl, 4-bromophenyl, 2,4-dibromophenyl, or 2,4,6-tribromophenyl. It may, however, be preferred that R₅ and R₆ are free of halogen atoms.

According to one or more further embodiments, R₅ and R₆ represent, independently from each other a phenyl alkyl group having 7 to 9 carbon atoms or a phenyl alkenyl group having 8 to 10 carbon atoms, which may be substituted in the alkyl group.

Especially suitable phosphonates for use as the second organophosphorus compound **FR2** include compounds of formula (II), wherein R₅ and R₆ represent, independently from each other a methyl group, an ethyl group, or a propyl group, especially a methyl group or an ethyl group.

According to one or more preferred embodiments, the at least one second organophosphorus compound **FR2** is a pentaerythritol spirobis(methylphosphonate), wherein the R₅ and R₆ in formula (I) represent methyl groups.

Preferably, the amount of the at least one second organophosphorus compound **FR2** makes up not more than 25 wt.-%, especially not more than 20 wt.-%, of the total weight of the pressure sensitive adhesive.

According to one or more embodiment, the pressure sensitive adhesive composition comprises 0.5 - 15 wt.-%, preferably 2.5 - 10 wt.-%, of the at least one second organophosphorus compound **FR2.**

It has also been found out that a compatibilizer can be used to compensate the certain degree of incompatibility that may arise between the flame retardant system **FR** and the basic adhesive formulation to maintain high adhesive performance.

It may thus be advantageous that the pressure sensitive adhesive composition further comprises at least one compatibilizer **CO** selected from ethylene vinyl acetate copolymers and polyester polyols.

Suitable ethylene vinyl acetate copolymers for use as the compatibilizer **CO** may have:
- a content of structural unit derived from vinyl acetate of at least 5 wt.-%, preferably at least 10 wt.-%, more preferably at least 15 wt.-%, based on the weight of the ethylene vinyl acetate copolymer and/or
- a melt flow index (190 °C/2.16 kg) determined according to ISO 1133 standard of at least 50 g/10min, preferably at least 100 g/10 min, more preferably at least 150 g/10 min and/or
- a melting point determined according to ISO 11357-3 standard of not more than 100 °C, preferably not more than 90 °C, more preferably not more than 80 °C.

Suitable ethylene vinyl acetate copolymers are commercially available, for example, under the trade name of Escorene^{®} (from Exxon Mobil), under the trade name of Primeva^{®} (from Repsol Quimica S.A.), under the trade name of Evatane^{®} (from Arkema Functional Polyolefins), under the trade name of Greenflex^{®} (from Eni versalis S.p.A.), under the trade name of Levapren^{®} (from Arlanxeo GmbH), and under the trade name of Elvaloy^{®} (from Dupont).

Suitable polyester polyols for use as the compatibilizer **CO** can be obtained by reacting dihydric and trihydric, preferably dihydric, alcohols, for example, 1,2-ethanediol, diethylene glycol, triethylene glycol, 1,2-propanediol, 1,3-propanediol, dipropylene glycol, 1,4-butanediol, 1,5-pentanediol, 1,6-hexanediol, 1,8-octanediol, 1,10-decanediol, 1,12-dodecanediol, dimer fatty alcohol, neopentyl glycol, glycerol, 1,1,1-trimethylolpropane or mixtures of the aforesaid alcohols, with organic dicarboxylic acids or tricarboxylic acids, preferably dicarboxylic acids, or their anhydrides or esters, such as succinic acid, glutaric acid, 3,3-dimethylglutaric acid, adipic acid, suberic acid, sebacic acid, undecanedioic acid, dodecanedicarboxylic acid, azelaic acid, maleic acid, fumaric acid, phthalic acid, dimer fatty acid, isophthalic acid, terephthalic acid, and hexahydrophthalic acid, or mixtures of the aforesaid acids. Polyester polyols made from lactones such as from ε-caprolactone, also known as polycaprolactones, are also suitable.

Particularly suitable polyester polyols include those obtained by reacting adipic acid, sebacic acid or dodecanedicarboxylic acid as dicarboxylic acid and hexanediol or neopentyl glycol as dihydric alcohol. Further examples of suitable polyester polyols include polyester polyols of oleochemical origin.

Polyester polyols of this type may be prepared, for example, by complete ring opening of epoxidized triglycerides of a fat mixture comprising at least partially olefinically unsaturated fatty acids, with one or more alcohols having 1-12 carbon atoms, and by subsequent partial transesterification of the triglyceride derivatives to give alkyl ester polyols having 1-12 carbon atoms in the alkyl radical. Particularly suitable crystalline and partially crystalline polyester polyols include adipic acid/hexanediol polyester and dodecanedicarboxylic acid/hexanediol polyesters.

According to one or more embodiments, the at least one compatibilizer **CO** is a polyester polyol, preferably an amorphous polyester polyol, more preferably an amorphous linear polyester polyol, preferably having a glass transition temperature of at or above 5 °C, preferably at or above 15 °C.

Suitable amorphous polyester polyols are commercially available, for example, under the trade name Dynacoll^{®} 7100-series (from Evonik Industries) and Fineplus^{®} 1800 series (from DIC Performance Resins).

The at least one compatibilizer **CO,** if used, is preferably present in the pressure sensitive adhesive composition in an amount of not more than 25 wt.-%, more preferably not more than 20 wt.-%. According to one or more embodiments, the at least one compatibilizer **CO** makes up 0.5 - 10 wt.-%, preferably 1.5 - 7.5 wt.-%, of the total weight of the pressure sensitive adhesive composition.

The pressure sensitive adhesive further comprises at least one tackifying resin **TR.**

The term "tackifying resin" designates in the present document resins that in general enhance the adhesion and/or tackiness of an adhesive composition. The term "tackiness" designates in the present document the property of a substance of being sticky or adhesive by simple contact. The tackiness can be measured, for example, as a loop tack. Preferred tackifying resins are tackifying at a temperature of 25°C

Examples of suitable tackifying resins include natural resins, synthetic resins and chemically modified natural resins.

Examples of suitable natural resins and chemically modified natural resins include rosins, rosin esters, phenolic modified rosin esters, and terpene resins. The term "rosin" is to be understood to include gum rosin, wood rosin, tall oil rosin, distilled rosin, and modified rosins, for example dimerized, hydrogenated, maleated and/or polymerized versions of any of these rosins.

Suitable terpene resins include copolymers and terpolymers of natural terpenes, such as styrene/terpene and alpha methyl styrene/terpene resins; polyterpene resins generally resulting from the polymerization of terpene hydrocarbons, such as the bicyclic monoterpene known as pinene, in the presence of Friedel-Crafts catalysts at moderately low temperatures; hydrogenated polyterpene resins; and phenolic modified terpene resins including hydrogenated derivatives thereof.

The term "synthetic resin" refers to compounds obtained from the controlled chemical reactions such as polyaddition or polycondensation between well-defined reactants that do not themselves have the characteristic of resins. Monomers that may be polymerized to synthesize the synthetic resins may include aliphatic monomer, cycloaliphatic monomer, aromatic monomer, or mixtures thereof. Aliphatic monomers can include C₄, C₅, and C₆ paraffins, olefins, and conjugated diolefins. Examples of aliphatic monomer or cycloaliphatic monomer include butadiene, isobutylene, 1,3-pentadiene, 1,4-pentadiene, cyclopentane, 1-pentene, 2-pentene, 2- methyl-1-pentene, 2-methyl-2-butene, 2-methyl-2-pentene, isoprene, cyclohexane, 1- 3-hexadiene, 1-4-hexadiene, cyclopentadiene, dicyclopentadiene, and terpenes. Aromatic monomer can include C₈, C₉, and C₁₀ aromatic monomer. Examples of aromatic monomer include styrene, indene, derivatives of styrene, derivatives of indene, coumarone and combinations thereof.

Particularly suitable synthetic resins include synthetic resins made by polymerizing mixtures of unsaturated monomers that are obtained as byproducts of cracking of natural gas liquids, gas oil, or petroleum naphthas. Such synthetic resins obtained from petroleum-based feedstocks are also characterized as "petroleum resins" or "hydrocarbon resins". These include also pure monomer aromatic resins, which are made by polymerizing aromatic monomer feedstocks that have been purified to eliminate color causing contaminants and to precisely control the composition of the product. Tackifying hydrocarbon resins typically have a relatively low average molecular weight (Mₙ), such in the range of 250 - 5000 g/mol and a glass transition temperature of above 0°C, preferably equal to or higher than 15°C, more preferably equal to or higher than 30°C.

Examples of suitable hydrocarbon resins for use as the tackifying resin **TR** include, for example, C5 aliphatic hydrocarbon resins, mixed C5/C9 aliphatic/aromatic hydrocarbon resins, aromatic modified C5 aliphatic hydrocarbon resins, cycloaliphatic hydrocarbon resins, mixed C5 aliphatic/cycloaliphatic hydrocarbon resins, mixed C9 aromatic/cycloaliphatic hydrocarbon resins, mixed C5 aliphatic/cycloaliphatic/C9 aromatic hydrocarbon resins, aromatic modified cycloaliphatic hydrocarbon resins, C9 aromatic hydrocarbon resins, polyterpene resins, and copolymers and terpolymers of natural terpenes as well hydrogenated versions of the aforementioned hydrocarbon resins. The notations "C5" and "C9" indicate that the monomers from which the resins are made are predominantly hydrocarbons having 4-6 and 8-10 carbon atoms, respectively. The term "hydrogenated" includes fully, substantially, and at least partially hydrogenated resins. Partially hydrogenated resins may have a hydrogenation level, for example, of 50%, 70%, or 90%.

Preferably, the at least one tackifying resin **TR** is a non-functionalized tackifying resin. The term "non-functionalized tackifying resin" designates tackifying resins which are not chemically modified so as to contain functional groups such as epoxy, silane, sulfonate, amide, or anhydride groups.

According to one or more embodiments, the at least one tackifying resin **TR** has:
- a softening point measured by a Ring and Ball method according to DIN EN 1238:2011 standard in the range of 65 - 175 °C, preferably 70 - 145 °C, more preferably 75 - 115 °C, even more preferably 80 - 125 °C and/or
- a number average molecular weight (Mₙ) in the range of 150 - 5000 g/mol, preferably 250 - 3500 g/mol, more preferably 250 - 3000 g/mol, even more preferably 250 - 2500 g/mol and/or
- a glass transition temperature (T_{g}) determined by dynamical mechanical analysis (DMA) as the peak of the measured loss modulus (G") curve using an applied frequency of 1 Hz and a strain level of 0.1% of at or above 0 °C, preferably at or above 10 °C, more preferably at or above 15 °C, even more preferably at or above 20 °C.

Suitable hydrocarbon resins are commercially available, for example, under the trade name of Wingtack^{®} series, Wingtack^{®} Plus, Wingtack^{®} Extra, and Wingtack^{®} STS (all from Cray Valley); under the trade name of Escorez^{®} 1000 series, Escorez^{®} 2000 series, and Escorez^{®} 5000 series (all from Exxon Mobile Chemical); under the trade name of Novares^{®} T series, Novares^{®} TT series, Novares^{®} TD series, Novares^{®} TL series, Novares^{®} TN series, Novares^{®} TK series, and Novares^{®} TV series (all from RÜTGERS Novares GmbH); and under the trade name of Kristalex^{®}, Plastolyn^{®}, Piccotex^{®}, Piccolastic^{®} and Endex^{®} (all from Eastman Chemicals).

According to one or more embodiments, the pressure sensitive adhesive composition comprises:
a) 15 - 45 wt.-%, preferably 20 - 40 wt.-%, of the at least one styrene block copolymer **SC,**
b) 15 - 55 wt.-%, preferably 20 - 50 wt.-%, of the at least one tackifying resin **TR,**
c) 2.5 - 25 wt.-%, preferably 5 - 20 wt.-%, of the at least one first organophosphorus compound **FR1,** and
d) 0.5 - 15 wt.-%, preferably 2.5 - 10 wt.-%, of the at least one second organophosphorus compound **FR2**.

According to one or more further embodiments, the pressure sensitive adhesive composition comprises:
a) 15 - 45 wt.-%, preferably 20 - 40 wt.-%, of the at least one styrene block copolymer **SC,**
b) 15 - 55 wt.-%, preferably 20 - 50 wt.-%, of the at least one tackifying resin **TR,**
c) 2.5 - 25 wt.-%, preferably 5 - 20 wt.-%, of the at least one first organophosphorus compound **FR1,**
d) 0.5 - 15 wt.-%, preferably 2.5 - 10 wt.-%, of the at least one second organophosphorus compound **FR2,** and
e) 0,.1 - 10 wt.-%, preferably 0.5 - 10 wt.-%, of the at least one compatibilizer **CO,** all the proportions being based on the total weight of the adhesive composition.

The pressure sensitive adhesive composition may further comprise:
e) At least one plasticizer **PL** selected from process oils and liquid polyolefin resins and/or
f) At least one thermoplastic resin **TP.**

Suitable process oils for use as the plasticizer **PL** include at least mineral oils, synthetic oils, and vegetable oils.

The term "mineral oil" refers in the present disclosure hydrocarbon liquids of lubricating viscosity (i.e., a kinematic viscosity at 100 °C of 1 cSt or more) derived from petroleum crude oil and subjected to one or more refining and/or hydroprocessing steps, such as fractionation, hydrocracking, dewaxing, isomerization, and hydrofinishing, to purify and chemically modify the components to achieve a final set of properties. In other words, the term "mineral" refers in the present disclosure to refined mineral oils, which can be also characterized as Group I-III base oils according to the classification of the American Petroleum Institute (API).

Suitable mineral oils to be used as the at least one plasticizer **PL** include paraffinic, naphthenic, and aromatic mineral oils. Particularly suitable mineral oils include paraffinic and naphthenic oils containing relatively low amounts of aromatic moieties, such as not more than 25 wt.-%, preferably not more than 15 wt.-%, based on the total weight of the mineral oil.

The term "synthetic oil" refers in the present disclosure to full synthetic (polyalphaolefin) oils, which are also known as Group IV base oils according to the classification of the American Petroleum Institute (API). Suitable synthetic oils are produced from liquid polyalphaolefins (PAOs) obtained by polymerizing α-olefins in the presence of a polymerization catalyst, such as a Friedel-Crafts catalyst. In general, liquid PAOs are high purity hydrocarbons with a paraffinic structure and high degree of side-chain branching. Particularly suitable synthetic oils include those obtained from so-called Gas-To-Liquids processes.

The term "liquid polyolefin resin" refers in the present disclosure to a polyolefin resin that flows at normal room temperature, i.e., has a pour point of less than 20 °C.

Suitable liquid polyolefin resins to be used as the at least one plasticizer **PL** include, for example, liquid polybutene and liquid polyisobutylene (PIB). The term "liquid polybutene" refers in the present disclosure to low molecular weight olefin oligomers comprising isobutylene and/or 1-butene and/or 2-butene. The ratio of the C4-olefin isomers can vary by manufacturer and by grade. When the C4-olefin is exclusively 1-butene, the material is referred to as "poly-n-butene" or "PNB". The term "liquid polyisobutylene" refers in the present document to low molecular weight olefin oligomers of isobutylene, preferably containing at least 75 wt.-%, more preferably at least 85 wt.-% of repeat units derived from isobutylene. Suitable liquid polybutenes and polyisobutylenes have a number average molecular weight (Mₙ) of less than 5000 g/mol, preferably less than 3500 g/mol, more preferably less than 3000 g/mol, even more preferably less than 2500 g/mol.

Suitable liquid polybutenes and polyisobutylenes are commercially available, for example, under the trade name of Indopol^{®}, such as Indopol^{®} H-300 and Indopol^{®} H-1200 (from Ineos); under the trade name of Glissopal^{®} , such as Glissopal^{®} V230, Glissopal^{®} V500, and Glissopal^{®} V700 (from BASF); under the trade name of Dynapak^{®}, such as Dynapak^{®} poly 230 (from Univar GmbH, Germany); and under the trade name of Daelim^{®} , such as Daelim^{®} PB 950 (from Daelim Industrial).

Especially suitable liquid polybutenes and liquid polyisobutylenes have:
- an average molecular weight (Mₙ) of 150 - 3500 g/mol, preferably 250 - 3000 g/mol, more preferably 350 - 2500 g/mol and/or
- a pour point determined according to ISO 3016 in the range of -10 to +15 °C, preferably from -10 to +10 °C and/or
- a polydispersity index (M_{w}/Mₙ), determined by GPC, of not more than 5, preferably in the range of 0.5 - 5.0, more preferably 1.0 - 4.5, even more preferably 1.0 - 3.5.

The at least one plasticizer **PL,** if used, preferably makes up 0.5 - 15 wt.-%, more preferably 1.5 - 12.5 wt.-%, even more preferably 2.5 - 10 wt.-% of the total weight of the pressure sensitive adhesive composition.

The pressure sensitive adhesive composition may further comprise at least one thermoplastic resin **TP** different from the at least one tackifying resin **TR.**

Especially suitable thermoplastic resins **TP** for use in the pressure sensitive adhesive have:
- a softening point measured by a Ring and Ball method according to DIN EN 1238:2011 standard in the range of 125 - 250 °C, preferably 130 - 225 °C, more preferably 135- 200 °C, even more preferably 140 - 185 °C and/or
- a number average molecular weight (Mₙ) in the range of 150 - 5000 g/mol, preferably 500 - 4500 g/mol, more preferably 1000- 3500 g/mol, even more preferably 1500 - 3500 g/mol and/or
- a glass transition temperature (T_{g}) determined by dynamical mechanical analysis (DMA) as the peak of the measured loss modulus (G") curve using an applied frequency of 1 Hz and a strain level of 0.1% of at or above 35 °C, preferably at or above 50 °C, more preferably at or above 65 °C, even more preferably at or above 75 °C.

In addition, the pressure sensitive adhesive composition can contain additional auxiliary substances and additives, for example, those selected from the group consisting of UV absorption agents, UV and heat stabilizers, optical brighteners, antioxidants, pigments, dyes, and desiccants. Exemplary UV stabilizers that can be included in the hot melt adhesive composition include, for example, sterically hindered phenols. However, the total amount of such additional auxiliary substances and additives makes up, preferably, not more than 15 wt.-%, more preferably not more than 10 wt.-%, even more preferably not more than 5 wt.-%, of the total weight of the pressure sensitive adhesive composition.

According to one or more embodiments, the pressure sensitive adhesive composition has a loop tack adhesion to a steel plate measured at a temperature of 23°C of at least 5 N/25 mm, preferably at least 7.5 N/25 mm, more preferably at least 10 N/25 mm, even more preferably at least 15 N/25 mm. The loop tack adhesion can be measured using a "FINAT test method no. 9 (FTM 9) as defined in FINAT Technical Handbook, 9th edition, published in 2014.

The pressure sensitive adhesive composition of the invention can be prepared by mixing its components at a temperature of 140 - 220°C, preferably 160 - 200°C, until a homogeneously mixed mixture is obtained. Any conventional mixing technique known to those skilled in the art may be used. Preferably, the mixing is conducted by using a kneading process. The components a) to d) and the optional components d) and e), if used, can be added to the mixer in any order. Preferably, the styrene block copolymer(s) **SC** is/are first mixed with the tackifying resin(s) **TR** until a homogeneously mixed mixture is obtained. The rest of the constituents can be added to the homogeneously mixed mixture of a) and b) in any order.

Another aspect of the present invention is a method for bonding two substrates to each other, the method comprising steps of:
i) Applying the pressure sensitive adhesive composition of the present invention as a melt to a surface of a first substrate,
ii) Letting the applied adhesive composition to cool and to solidify,
iii) Contacting the solidified adhesive with a surface of a second substrate and pressing the substrates together without re-heating the solidified adhesive.

Preferably, in step iii) the substrates are pressed together for a period of at least 1 minute and using a pressure of at least 1 kg/cm².

The first and second substrates can be sheet-like articles having first and second major surfaces defined by peripheral edges and defining a thickness there between, or three-dimensional shaped articles have any type of shape.

In the method for bonding two substrates to each other, the pressure sensitive adhesive composition is first heated to a temperature above the softening point of the adhesive composition and applied on the surface of the first substrate in molten state using any conventional technique, preferably by spray coating or extrusion with a slot die. The pressure sensitive adhesive composition can be applied to the surface of the first substrate with a coating weight of, for example, 20 - 500 g/m², such as 40 - 350 g/m², especially 50 - 150 g/m².

The first and second substrates can be composed of any conventional material including polymeric material, metal, painted metal, glass, mineral material, for example silicate minerals such as mica (Muscovite), wood, wood derived materials such as natural fiber polypropylene (NFPP), and fiber materials. Suitable polymeric materials include, for example, polyethylene (PE), in particular high density polyethylene (HDPE), polypropylene (PP), glass-fiber reinforced polypropylene (GFPP), polyvinyl chloride (PVC), polyethylene terephthalate (PET), polystyrene (PS), polycarbonate (PC), polymethylmethacrylate (PMMA), acrylonitrile butadiene styrene (ABS), polyamide (PA), polyurethane, and combinations thereof.

The first and second substrates can be composed of a single layer or of multiple layers of different types of materials. The layer(s) composed of polymeric materials can further contain additives such as fillers, plasticizers, flame retardants, thermal stabilizers, antioxidants, pigments, dyes, and biocides.

According to one or more embodiments, at least one of the first and second substrates, or in case the first and/or second substrate is/are composed of multiple layers, at least one the outer layers of the first and second substrates, which are contacted with the adhesive composition in step II) or step III) of the method, is composed of metal, preferably selected from stainless steel, electro-plated steel, aluminum, and aluminum alloy or of mineral material, preferably silicate mineral, such as mica.

According to one or more further embodiments, the at least one of the first and second substrates, or in case the first and/or second substrate is/are composed of multiple layers, at least one the outer layers of the first and second substrates, which are contacted with the adhesive composition in step II) or step III) of the method, is composed of electro-plated steel or aluminum alloy, preferably of electro nickel-plated steel or aluminum 3003 alloy. These types of materials are commonly used in car battery shells, which are designed to carry and protect battery modules, especially battery modules of electric vehicles.

According to one or more embodiments, the at least one of the first and second substrates, or in case the first and/or second substrate is/are composed of multiple layers, at least one the outer layers of the first and second substrates, which are contacted with the adhesive composition in step II) or step III) of the method, is composed of mineral material, preferably silicate mineral, such as mica. These types of materials are commonly used as fire resistant protective plates for battery module covers.

According to one or more further embodiments, the at least one of the first and second substrates, or in case the first and/or second substrate is/are composed of multiple layers, at least one the outer layers of the first and second substrates, which are contacted with the adhesive composition in step II) or step III) of the method, is composed of a thermal interface material, thermal insulation material, electric insulation material, or a coating for electric insulation material.

The term "thermal interface material (TIM)" refers here to materials that conduct heat between two or more solid mating surfaces. These types of materials can be used as gap fillers to improve heat transfer between two surfaces, for example between surfaces of an electronic device and a heat sink.

Examples of commonly used TIM materials include materials based on pyrolytic graphite, dielectric pads, thermally conductive adhesives, such as epoxy-, silicone, and polyurethane-based adhesives, and phase change materials.

The term "thermal insulation material" refers to materials that have been designed to inhibit heat transfer between objects in thermal contact by conduction or convection, or in a range of radiative influences. Materials that are used for thermal and electric insulation of car batteries include, for example, carbon fiber, ceramic fiber, meta-aramid fiber based materials, silica aerogel, polypropylene, polyester, polyimide, and mica flakes, typically mixed with a binder.

Materials used as coatings for electric insulation materials include, for example, reactive and non-reactive compositions, such as adhesives and sealants, particularly comprising acrylic resins, epoxide resins, polyurethanes, silane-functionalized polyurethanes, and butyl rubber.

Another aspect of the present invention is a composite element obtainable by using the method for bonding two substrate to each other of the present invention.

The composite element of the present invention can be used, for example, for producing battery packs and/or modules of electronic vehicles or interior lining components of automotive vehicles. Examples of interior lining components include door panel pieces, switch panels, rear parcel shelves, head liners, sliding roofs, center consoles, glove compartments, sun visors, pillars, door handles, arm rests, flooring, cargo flooring, and trunk area flooring as well as sleeping cabins and rear panels of trucks.

Another aspect of the present invention is an adhesive tape comprising a carrier layer and an adhesive layer composed of the pressure sensitive adhesive composition of the present invention.

The carrier layer preferably has a top and bottom surfaces, i.e., upper and lower major surfaces, defining a thickness there between. The adhesive layer covers at least a portion of the top or bottom surface of the carrier layer.

The adhesive layer can be present on the carrier layer in form a continuous or a discontinuous adhesive layer. The term "continuous adhesive layer" refers in the present disclosure to layers consisting of one single area coated with an adhesive composition whereas the term "discontinuous adhesive layer" refers to layers consisting of two or more areas coated with an adhesive composition, which areas are not connected to each other to form a continuous layer.

According to one or more embodiments, the adhesive tape further comprises a release liner covering the outward facing surface of the adhesive layer opposite to the side of the carrier layer.

The release liner may be used to prevent premature unwanted adhesion and to protect the adhesive layer from moisture, fouling, and other environmental factors. In case the adhesive tape is provided in form of rolls, the release liner enables ease of unwind without sticking of the adhesive to the back side of the adhesive tape. The release liner may be sliced into multiple sections to allow portioned detachment of the liner from the adhesive layer.

Suitable materials for the release liner include Kraft paper, polyethylene coated paper, silicone coated paper as well as polymeric films, for example, polyethylene, polypropylene, and polyester films coated with polymeric release agents selected from silicone, silicone urea, urethanes, waxes, and long chain alkyl acrylate release agents.

According to one or more embodiments, the adhesive tape is a double-sided tape comprising a first adhesive layer composed of the pressure sensitive adhesive composition of the present invention covering at least a portion of the top surface of the carrier layer and a second adhesive layer composed of the pressure sensitive adhesive composition of the present invention covering at least a portion of the bottom surface of the carrier layer.

Preferred dimensions of the carrier layer depend mainly on the application of the adhesive tape. The adhesive tape can be provided, for example, in form of a relatively narrow strip, wherein the carrier layer has a width, for example, in the range of 10 - 750 mm, especially 25 - 650 mm, such as 50 - 500 mm, or in for form of a broad sheet, wherein the carrier layer has a width, for example, in the range of 0.85 - 3.5 m, especially 1 - 3 m, such as 1 - 2.5 m.

The single- and double-sided adhesive tapes can be prepared by a method comprising steps of:
I) Applying the pressure sensitive adhesive composition of the present invention as a melt to a surface of a carrier layer,
II) Letting the applied adhesive composition to cool and to solidify, and
iii) Optionally applying a release liner to cover at least a portion of an outer surface of the solidified adhesive on the side opposite to the side of the carrier layer.

The pressure sensitive adhesive composition can be applied to the surface of the carrier layer using any conventional coating technique, preferably by spraying or extrusion with a slot die.

Another aspect of the present invention is use of the pressure sensitive adhesive composition of the present invention as an assembly adhesive, preferably for electronic vehicle batteries.

When used as assembly adhesive, the pressure sensitive adhesive composition can be applied directly to a surface of a substrate, preferably by spraying or extrusion with a slot die, or provided in form of a single- or double sided adhesive tape, which is then used, after removal of the release liner(s), if present, for bonding of substrates to each other.

The use of the pressure sensitive adhesive may include bonding of battery pouches or cells, such as prismatic or cylindrical cells, to each other, bonding of fire resistant protective plates to battery module covers, bonding of a thermal interface material or thermal insulation material or electric insulation material or a coating for electric insulation material to battery pouches, cells, or modules, or bonding of compressible layers ("pads") to battery pouches or cells.

Still another aspect of the present invention is use of a pressure sensitive adhesive as an assembly adhesive for electronic vehicle batteries, wherein the pressure sensitive adhesive comprises at least one styrene block copolymer **SC** and a flame retardant system **FR** and has at least level V2 flame resistance, preferably at least level V1 flame resistance, as measured according to UL 94 test for flammability of plastics.

When used as assembly adhesive, the pressure sensitive adhesive can be applied directly to a surface of a substrate, preferably by spraying or extrusion with a slot die, or provided in form of a single- or double sided adhesive tape, which is then used, after removal of the release liner(s), if present, for bonding of substrates to each other.

In some embodiments, the styrene block copolymer **SC** comprises at least one styrene isoprene diblock (SI) and/or triblock (SIS) copolymer and/or at least one styrene-butadiene diblock (SB) and/or triblock (SBS) copolymer.

Preferably, the styrene block copolymer **SC** has:
- a polystyrene content of not more than 45 wt.-%, more preferably not more than 40 wt.-% and/or
- a melt flow rate determined according to ASTM D1238 (200 °C/5 kg) of not more than 75 g/10 min, more preferably not more than 50 g/10 min and/or
- a solution viscosity of determined according to ASTM D2196 of not more than 1000 MPa·s, preferably not more than 850 MPa·s.

In some embodiments, the pressure sensitive adhesive further comprises a flame retardant system **FR** comprising at least one first organophosphorus compound **FR1** having a melting temperature of at or below 125 °C and/or at least one second organophosphorus compound **FR2** having a melting temperature of at least 150 °C.

In other embodiments, the pressure sensitive adhesive comprises at least one tackifying resin **TR.**

In one or more preferred embodiments, the pressure sensitive adhesive comprises the at least one first organophosphorus compound **FR1** and the at least one second organophosphorus compound **FR2** as described above.

The pressure sensitive adhesive may be composed of the pressure sensitive adhesive composition as described above.

The use of the pressure sensitive adhesive may include bonding of battery pouches or cells, such as prismatic or cylindrical cells, to each other, bonding of fire resistant protective plates to battery module covers, bonding of a thermal interface material or thermal insulation material or electric insulation material or a coating for electric insulation material to battery pouches, cells, or modules, or bonding of compressible layers ("pads") to battery pouches or cells.

### Examples

The followings compounds and products shown in Table 1 were used in the examples.

**Table 1**

| | | |
|---|---|---|
| **SC1** | Blend of linear styrene-isoprene-styrene (SIS) triblock and styrene-isoprene (SI) diblock (42 wt.-%) copolymer having a polystyrene content of 10 - 20 wt.-% | |
| **SC2** | Styrene-butadiene (SB) linear diblock copolymer having a polystyrene content of 30 - 40 wt.-% | |
| **TR-1** | Aromatically modified C5 hydrocarbon resin, Ring & Ball softening point 90-100 °C (E-950) | |
| **TR-2** | Aromatically modified C5 hydrocarbon resin, Ring & Ball softening point 80-90 °C | |
| **FR1** | PX-200^{®} (RDX), halogen-free solid type phosphate ester flame retardant, melting point 92 °C | Daihachi |
| **FR2** | Aflammit^{®} PCO 900, non-halogenated flame retardant, melting point ca. 245 °C | THOR |
| **CO1** | Random ethylene-vinyl acetate copolymer, vinyl acetate content 28 wt.-% | |
| **CO2** | Linear amorphous polyester polyol, glass transition temperature 50 °C (DSC, DIN 53765) | |
| **CO3** | Acrylic resin, copolymer of methyl methacrylate and acrylates, glass transition temperature -45 °C | |
| **PL** | Liquid polyisobutylene, Mₙ (GPC) ~ 950 g/mol, pour point -1 °C (ASTM D97) | |
| **HR** | Thermoplastic resin made from purified aromatic hydrocarbon monomers, Ring and Ball softening point 150-160 °C (ASTM E 28) | |
| Antioxidant | Sterically hindered phenolic antioxidant | |

### Preparation of the adhesive compositions

For each adhesive composition, the constituents as presented in Table 2 were mixed at a temperature of 180 °C in a Sigma-kneader. The preparation process was started by mixing of the styrene block copolymers, a small portion of the resins, and the additives. The first mixing step was conducted under CO₂-atmosphere and continued for 45 minutes after which the rest of the resins were added, and the mixing was continued for 30 minutes under vacuum.

Liquid polyisobutylene was then added to mixture and mixing was continued under vacuum for another 30 minutes. The adhesive compositions were stored in siliconized boxes for one day before they were used for characterization of their properties.

### Measurement methods

The pressure sensitive adhesive compositions were characterized using the following measurement methods.

### Viscosity at 190 °C

The sample adhesive composition provided in a sealed tube was preheated in an oven at a temperature of 190 °C for a time period of 20 minutes. After the heating, a sample of 9.5 g of the adhesive composition was weighted and placed in a disposable sleeve to a viscometer. The viscosity was measured at temperature of 190 °C at 5 revolutions per minute using a Brookfield DV-2 Thermosel viscometer with a spindle No. 27. The values obtained with 20 minutes of tempering at the measurement temperature and five minutes of measurement were recorded as representative viscosities.

### Peel strength 180°

A polyester foil with a width of ca. 25 mm is first coated with a melt of the tested adhesive composition with a coating thickness of 100 µm. A test stripe having a length of ca. 200 mm was cut from the self-adhesive material and the adhesive layer is contacted with a stainless-steel test board having dimensions of 200 x 50 x 2 mm (length, width, thickness) with an overlap of ca. 70 mm. The adhesive strip was rolled over with a standard roller four times using a speed of ca. 10 mm/s.

The peel adhesion was then measured immediately after the adhesive strip had been rolled over with a conventional Zwick material testing machine using a testing speed of 300 mm/min. The average pull value obtained during peeling of a 5 cm length of the test stripe from the stainless-steel board at an angle of 180 °C was recorded as the peel strength value for the tested adhesive.

The values for the adhesive peel strength presented in Table 3 have been obtained as an average from two measurements conducted with the same adhesive composition.

### Loop tack

The loop tack of the adhesive compositions was tested at a temperature of 23°C according to a method "FTM 9 -Loop Tack measurement". For the measurement of loop tack, a sample strip having a width of 25 mm and a length of about 200 mm was first coated with the tested adhesive composition with coating thickness of 100 µm. The sample strip was then formed into a loop and brought into contact with a steel plate moving at a constant speed of 300 mm per minute. As soon as a contact area of 25 mm by 25 mm was created, the loop was withdrawn, and the force required to separate the loop from the testing board was recorded as the loop tack value.

The values for loop tack presented in Table 2 have been obtained as an average from two measurements conducted with the same adhesive composition.

### Shear adhesion failure temperature (SAFT)

The tested adhesive composition was applied as a melt on a surface of a sicol paper with a coating thickness of 100 µm. An adhesive stripe having a length of ca. 70 mm and width of ca. 25 mm was then cut from the self-adhesive material and the adhesive layer was contacted with a stainless-steel test board having dimensions of 60 x 40 mm (length, width) with an overlap of 25 mm. The self-adhesive strip was rolled over with a standard roller four times using a speed of ca. 10 mm/s.

The SAFT values were measured immediately after the adhesive strip had been rolled over. At the beginning of the SAFT measurement, the free end of the test adhesive stripe was folded over itself to form a loop. The test specimens composed of the stainless-steel test board and the adhesive stripe were then suspended vertically from the free end of the stainless-steel board on a metal hook and placed in an oven, which had been preheated to a temperature of 40°C. A metal weight corresponding to a static load of 500 g or 1000 g was attached to another metal hook fixed on a clamp attached to the loop formed on the free end of the adhesive stripe.

The test specimens were first kept in the oven at a temperature of 40°C for a time period of 30 minutes. Three test specimens at a time were placed in the oven for the SAFT measurement. Then the temperature of the oven was increased at a constant rate of 0.37 % per minute. The temperature was increased until the adhesive bonds of all test specimens in the oven had been failed. The last measured temperature before the bond failure occurred was recorded as the representative heat stability temperature. For each tested adhesive composition, two measurements were conducted. In case the difference between two SAFT values obtained with the same adhesive composition was more than 10 °C, a third measurement was conducted.

The SAFT values of the tested adhesive compositions presented in Table have been obtained as an average of two measurements conducted with the same adhesive composition.

**Table 3**

| **Compositions, [wt.-%]** | **Ref-1** | **Ref-2** | **Ref-3** | **Ref-4** | **Ex-1** | **Ex-3** | **Ex-3** |
|---|---|---|---|---|---|---|---|
| SC1 | 29.00 | 27.50 | 29.00 | 29.00 | 29.00 | 27.50 | 27.50 |
| SC2 | 4.80 | 4.80 | 4.80 | 4.80 | 4.80 | 4.80 | 4.80 |
| TR1 | 10.00 | 10.00 | 10.00 | 10.00 | 10.00 | 10.00 | 10.00 |
| TR2 | 22.35 | 20.85 | 19.85 | 19.85 | 22.35 | 20.85 | 20.85 |
| FR1 | 15.00 | 15.00 | 15.00 | 15.00 | 10.00 | 10.00 | 10.00 |
| FR2 | 0.00 | 0.00 | 0.00 | 0.00 | 5.00 | 5.00 | 5.00 |
| CO1 | 0.00 | 3.00 | 0.00 | 0.00 | 0.00 | 3.00 | 0.00 |
| CO2 | 0.00 | 0.00 | 2.50 | 0.00 | 0.00 | 0.00 | 3.00 |
| CO3 | 0.00 | 0.00 | 0.00 | 2.50 | 0.00 | 0.00 | 0.00 |
| PL | 5.00 | 5.00 | 5.00 | 5.00 | 5.00 | 5.00 | 5.00 |
| HR | 13.00 | 13.00 | 13.00 | 13.00 | 13.00 | 13.00 | 13.00 |
| Antioxidant | 0.85 | 0.85 | 0.85 | 0.85 | 0.85 | 0.85 | 0.85 |
| Total | 100.00 | 100.00 | 100.00 | 100.00 | 100.00 | 100.00 | 100.00 |

| **Properties** | | | | | | | |
|---|---|---|---|---|---|---|---|
| Viscosity @190 °C [mPas] | n.a. | n.a. | n.a. | 18700 | 20325 | 20275 | 21000 |
| Peel strength from steel [N/2.5 cm] | n.a. | n.a. | n.a. | n.a. | 54.4 | 32.5 | 46 |
| Loop tack from steel [N/2.5 cm] | n.a. | n.a. | n.a. | > 35 | 55 | 33 | 50 |
| SAFT 500 g [°C] | n.a. | n.a. | n.a. | 72 | 79 | 82 | 81 |
| SAFT 1000 g [°C] | n.a. | n.a. | n.a. | 61 | 74 | 75 | 75 |
| UL 94V test result | V-2 | V-2 | V-2 | V-2 | V-0 | V-0 | V-0 |

## Claims

1. A pressure sensitive adhesive composition comprising:
a) At least one styrene block copolymer **SC,**
b) At least one tackifying resin **TR,**
c) A flame retardant system **FR** comprising:
c1)At least one first organophosphorus compound **FR1** having a melting temperature of at or below 125 °C
c2)At least one second organophosphorus compound **FR2** having a melting temperature of at least 150 °C, and
d) Optionally at least one compatibilizer **CO.**

2. The pressure sensitive adhesive composition according to claim 1, wherein the at least one styrene block copolymer SC comprises at least one styrene isoprene diblock (SI) and/or triblock (SIS) copolymer and/or at least one styrene-butadiene diblock (SB) and/or triblock (SBS) copolymer.

3. The pressure sensitive adhesive composition according to any one of previous claims, wherein the at least one first organophosphorus compound **FR1** is represented by formula (I): 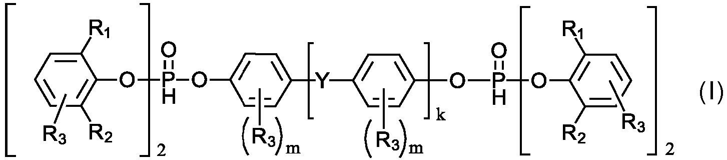
wherein R₁ and R₂ each independently represent an alkyl group having 1 to 5 carbon atoms;
R₃ and R₄ each independently represent a hydrogen atom or an alkyl group having 1 to 5 carbon atoms;
Y represents a bond or a group -CH₂-, -C(CH₃)₂-, -S-, -SO₂-, -O-, -CO-, or -N=N-;
k represents 0 or 1; and
m represents an integer of 0 to 4.

4. The pressure sensitive adhesive composition according to any one of previous claims, wherein the at least one first organophosphorus compound **FR1** is selected from tetrakis(2,6-dimethylphenyl)-m-phenylene-bisphosphate, tetrakis(2,6-dimethylphenyl)-p-phenylene-bisphosphate, and tetrakis (2,6-dimethylphenyl)-4,4'-diphenylenebisphosphate.

5. The pressure sensitive adhesive composition according to any one of previous claims comprising 2.5 - 25 wt.-%, preferably 5 - 20 wt.-%, of the at least one first organophosphorus compound **FR1.**

6. The pressure sensitive adhesive composition according to any one of previous claims, wherein the at least one second organophosphorus compound **FR2** is a phosphonate of formula (II): 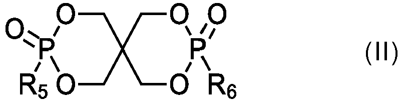 Wherein R₅ and R₆ represent, independently from each other, substituted or unsubstituted linear or branched alkyl groups having 1 to 10 carbon atoms or substituted or unsubstituted cycloalkyl or aryl groups.

7. The pressure sensitive adhesive composition according to claim 6, wherein R₅ and R₆ represent, independently from each other a methyl group, an ethyl group, or a propyl group, preferably a methyl group or ethyl group.

8. The pressure sensitive adhesive composition according to any one of previous claims comprising 0.5 - 15 wt.-%, preferably 2.5 - 10 wt.-%, of the at least one second organophosphorus compound **FR2.**

9. The pressure sensitive adhesive composition according to any one of previous claims further comprising at least one compatibilizer **CO** selected from ethylene vinyl acetate copolymers and polyester polyols.

10. The pressure sensitive adhesive composition according to claim 9, wherein the at least one compatibilizer **CO** is a polyester polyol, preferably an amorphous polyester polyol, preferably having a glass transition temperature of at or above 5 °C, preferably at or above 15 °C.

11. The pressure sensitive adhesive composition according to any one of previous claims comprising 0.5 - 10 wt.-%, preferably 1.5 - 7.5 wt.-%, based on the total weight of the adhesive composition, of the at least one compatibilizer **CO.**

12. The pressure sensitive adhesive composition according to any of previous claims comprising:
a) 15 - 45 wt.-%, preferably 20 - 40 wt.-%, of the at least one styrene block copolymer **SC,**
b) 15 - 55 wt.-%, preferably 20 - 50 wt.-%, of the at least one tackifying resin **TR,**
c) 2.5 - 25 wt.-%, preferably 5 - 20 wt.-%, of the at least one first organophosphorus compound **FR1,** and
d) 0.5 - 15 wt.-%, preferably 2.5 - 10 wt.-%, of the at least one second organophosphorus compound **FR2,** and
e) 0 - 10 wt.-%, preferably 0.5 - 10 wt.-%, of the at least one compatibilizer **CO,** all the proportions being based on the total weight of the adhesive composition.

13. A method for bonding two substrates to each other, the method comprising steps of:
i) Applying the pressure sensitive adhesive composition according to any of claims 1-12 as a melt to a surface of a first substrate,
ii) Letting the applied adhesive to cool and to solidify,
iii) Contacting the solidified adhesive with a surface of a second substrate and pressing the substrates together without re-heating the solidified adhesive.

14. An adhesive tape comprising a carrier layer and an adhesive layer composed of the pressure sensitive adhesive composition according to any one of claims 1-12.

15. Use of the pressure sensitive adhesive composition according to any one of claims 1-12 as an assembly adhesive, preferably for electronic vehicle batteries.

## Patentansprüche

1. Haftklebstoffzusammensetzung, umfassend:
a) mindestens ein Styrol-Blockcopolymer SC,
b) mindestens ein klebrigmachendes Harz TR,
c) ein flammhemmendes System FR, umfassend:
c1) mindestens eine erste phosphororganische Verbindung FR1 mit einer Schmelztemperatur bei oder unter 125 °C,
c2) mindestens eine zweite phosphororganische Verbindung FR2 mit einer Schmelztemperatur von mindestens 150 °C, und
d) gegebenenfalls mindestens einen Verträglichkeitsvermittler CO.

2. Haftklebstoffzusammensetzung nach Anspruch 1, wobei das mindestens eine Styrol-Blockcopolymer SC mindestens ein Styrol-Isopren-Diblock(SI)- und/oder -Triblock(SIS)-Copolymer und/oder mindestens ein Styrol-Butadien-Diblock(SB)- und/oder -Triblock(SBS)-Copolymer umfasst.

3. Haftklebstoffzusammensetzung nach einem der vorhergehenden Ansprüche, wobei die mindestens eine erste phosphororganische Verbindung FR1 durch die Formel (I) wiedergegeben wird: 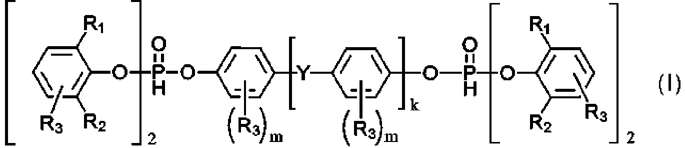
wobei R₁ und R₂ jeweils unabhängig für eine Alkylgruppe mit 1 bis 5 Kohlenstoffatomen stehen;
R₃ und R₄ jeweils unabhängig für ein Wasserstoffatom oder eine Alkylgruppe mit 1 bis 5 Kohlenstoffatomen stehen;
Y für eine Bindung oder eine Gruppe -CH₂-, -C(CH₃)₂-, -S-, -SO₂-, -O-, -CO- oder -N=N- steht;
k für 0 oder 1 steht; und
m für eine ganze Zahl von 0 bis 4 steht.

4. Haftklebstoffzusammensetzung nach einem der vorhergehenden Ansprüche, wobei die mindestens eine erste phosphororganische Verbindung FR1 aus Tetrakis(2,6-dimethylphenyl)-m-phenylenbisphosphat, Tetrakis(2,6-dimethylphenyl)-p-phenylenbisphosphat und Tetrakis(2,6-dimethylphenyl)-4,4'-diphenylenbisphosphat ausgewählt ist.

5. Haftklebstoffzusammensetzung nach einem der vorhergehenden Ansprüche, umfassend 2,5 - 25 Gew.-%, vorzugsweise 5 - 20 Gew.-%, der mindestens einen ersten phosphororganischen Verbindung FR1.

6. Haftklebstoffzusammensetzung nach einem der vorhergehenden Ansprüche, wobei es sich bei der mindestens einen zweiten phosphororganischen Verbindung FR2 um ein Phosphonat der Formel (I) handelt: 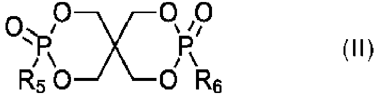 wobei R₅ und R₆ unabhängig voneinander für substituierte oder unsubstituierte lineare oder verzweigte Alkylgruppen mit 1 bis 10 Kohlenstoffatomen oder substituierte oder unsubstituierte Cycloalkyl- oder Arylgruppen stehen.

7. Haftklebstoffzusammensetzung nach Anspruch 6, wobei Rₛ und R₆ unabhängig voneinander für eine Methylgruppe, eine Ethylgruppe oder eine Propylgruppe, vorzugsweise eine Methylgruppe oder Ethylgruppe, stehen.

8. Haftklebstoffzusammensetzung nach einem der vorhergehenden Ansprüche, umfassend 0,5 - 15 Gew.-%, vorzugsweise 2,5 - 10 Gew.-%, der mindestens einen zweiten phosphororganischen Verbindung FR2.

9. Haftklebstoffzusammensetzung nach einem der vorhergehenden Ansprüche, ferner umfassend mindestens einen Verträglichkeitsvermittler CO, der aus EthylenVinylacetat-Copolymeren und Polyesterpolyolen ausgewählt ist.

10. Haftklebstoffzusammensetzung nach Anspruch 9, wobei es sich bei dem mindestens einen Verträglichkeitsvermittler CO um ein Polyesterpolyol, vorzugsweise ein amorphes Polyesterpolyol, vorzugsweise mit einer Glasübergangstemperatur bei oder über 5 °C, vorzugsweise bei oder über 15 °C, handelt.

11. Haftklebstoffzusammensetzung nach einem der vorhergehenden Ansprüche, umfassend 0,5 - 10 Gew.-%, vorzugsweise 1,5 - 7,5 Gew.-%, bezogen auf das Gesamtgewicht der Klebstoffzusammensetzung, des mindestens einen Verträglichkeitsvermittlers CO.

12. Haftklebstoffzusammensetzung nach einem der vorhergehenden Ansprüche, umfassend:
a) 15 - 45 Gew.-%, vorzugsweise 20 - 40 Gew.-%, des mindestens einen Styrol-Blockcopolymers SC,
b) 15 - 55 Gew.-%, vorzugsweise 20 - 50 Gew.-%, des mindestens einen klebrigmachenden Harzes HR,
c) 2,5 - 25 Gew.-%, vorzugsweise 5 - 20 Gew.-%, der mindestens einen ersten phosphororganischen Verbindung FR1 und
d) 0,5 - 15 Gew.-%, vorzugsweise 2,5 - 10 Gew.-%, der mindestens einen zweiten phosphororganischen Verbindung FR2 und
e) 0 - 10 Gew.-%, vorzugsweise 0,5 - 10 Gew.-%, des mindestens einen Verträglichkeitsvermittlers CO, wobei sich alle Anteile auf das Gesamtgewicht der Klebstoffzusammensetzung beziehen.

13. Verfahren zum Verbinden von zwei Substraten miteinander, wobei das Verfahren die folgenden Schritte umfasst:
i) Aufbringen der Haftklebstoffzusammensetzung nach einem der Ansprüche 1-12 als Schmelze auf eine Oberfläche eines ersten Substrats,
ii) Abkühlen- und Festwerdenlassen des aufgebrachten Klebstoffs,
iii) Inkontaktbringen des verfestigten Klebstoffs mit einer Oberfläche eines zweiten Substrats und Zusammenpressen der Substrate ohne Wiedererhitzen des verfestigten Klebstoffs.

14. Klebeband, umfassend eine Trägerschicht und eine Klebstoffschicht aus der Haftklebstoffzusammensetzung nach einem der Ansprüche 1-12.

15. Verwendung der Haftklebstoffzusammensetzung nach einem der Ansprüche 1-12 als Montageklebstoff, vorzugsweise für Batterien für elektronische Fahrzeuge.

## Revendications

1. Composition d'adhésif sensible à la pression comprenant :
a) au moins un copolymère à blocs de styrène SC,
b) au moins une résine tackifiante TR,
c) un système d'agent ignifuge FR comprenant :
c1) au moins un premier composé organophosphoré FR1 ayant une température de fusion de ou inférieure à 125 °C
c2) au moins un deuxième composé organophosphoré FR2 ayant une température de fusion d'au moins 150 °C, et
d) éventuellement au moins un agent compatibilisant CO.

2. Composition d'adhésif sensible à la pression selon la revendication 1, dans laquelle l'au moins un copolymère à blocs de styrène SC comprend au moins un copolymère dibloc styrène-isoprène (SI) et/ou tribloc (SIS) et/ou au moins un copolymère dibloc styrène-butadiène (SB) et/ou tribloc (SBS).

3. Composition d'adhésif sensible à la pression selon l'une quelconque des revendications précédentes, l'au moins un premier composé organophosphoré FR1 étant représenté par la formule (I) : 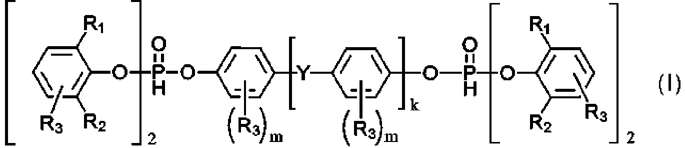
dans laquelle R₁ et R₂ représentent chacun indépendamment un groupe alkyle ayant 1 à 5 atomes de carbone ;
R₃ et R₄ représentent chacun indépendamment un atome d'hydrogène ou un groupe alkyle ayant 1 à 5 atomes de carbone ;
Y représente une liaison ou un groupe -CH₂-, -C(CH₃)₂-, - S-, -SO₂-, -O-, -CO-, ou -N=N- ;
k représente 0 ou 1 ; et
m représente un entier de 0 à 4.

4. Composition d'adhésif sensible à la pression selon l'une quelconque des revendications précédentes, dans laquelle le au moins un premier composé organophosphoré FR1 est choisi parmi tétrakis(2,6-diméthylphényl)-m-phénylène-bisphosphate, tétrakis(2,6-diméthylphényl)-p-phénylène-bisphosphate et tétrakis(2,6-diméthylphényl)-4,4'-diphénylènebisphosphate.

5. Composition d'adhésif sensible à la pression selon l'une quelconque des revendications précédentes, comprenant 2,5 à 25 % en poids, de préférence 5 à 20 % en poids, de l'au moins un premier composé organophosphoré FR1.

6. Composition d'adhésif sensible à la pression selon l'une quelconque des revendications précédentes, l'au moins un deuxième composé organophosphoré FR2 étant un phosphonate de formule (II) : 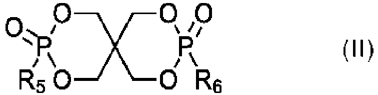 dans laquelle R₅ et R₆ représentent, indépendamment l'un de l'autre, des groupes alkyle, linéaires ou ramifiés, substitués ou non substitués, ayant 1 à 10 atomes de carbone, ou des groupes cycloalkyle ou aryle substitués ou non substitués.

7. Composition d'adhésif sensible à la pression selon la revendication 6, dans laquelle R₅ et R₆ représentent, indépendamment l'un de l'autre, un groupe méthyle, un groupe éthyle ou un groupe propyle, de préférence un groupe méthyle ou un groupe éthyle.

8. Composition d'adhésif sensible à la pression selon l'une quelconque des revendications précédentes, comprenant 0,5 % à 15 % en poids, de préférence 2,5 % à 10 % en poids, de l'au moins un second composé organophosphoré FR2.

9. Composition d'adhésif sensible à la pression selon l'une quelconque des revendications précédentes, comprenant en outre au moins un agent compatibilisant CO choisi parmi les copolymères éthylène-acétate de vinyle et les polyester polyols.

10. Composition d'adhésif sensible à la pression selon la revendication 9, dans laquelle le au moins un agent compatibilisant CO est un polyester polyol, de préférence un polyester polyol amorphe, ayant de préférence une température de transition vitreuse d'au moins 5 °C, de préférence d'au moins 15 °C.

11. Composition d'adhésif sensible à la pression selon l'une quelconque des revendications précédentes, comprenant 0,5 à 10 % en poids, de préférence 1,5 à 7,5 % en poids, sur la base du poids total de la composition d'adhésif, de l'au moins un agent compatibilisant CO.

12. Composition d'adhésif sensible à la pression selon l'une quelconque des revendications précédentes, comprenant :
a) 15 - 45 % en poids, de préférence 20 - 40 % en poids, de l'au moins un copolymère à blocs de styrène SC,
b) 15 à 55 % en poids, de préférence 20 à 50 % en poids de l'au moins une résine tackifiante TR,
c) 2,5 - 25 %, de préférence 5 - 20 %, en poids du au moins un premier composé organophosphoré FR1, et
d) 0,5 - 15 % en poids, de préférence 2,5 - 10 % en poids, du au moins un deuxième composé organophosphoré FR2, et
e) 0 à 10 % en poids, de préférence 0,5 à 10 % en poids de l'au moins un agent compatibilisant CO, toutes les proportions étant basées sur le poids total de la composition d'adhésif.

13. Procédé de liaison de deux substrats l'un à l'autre, le procédé comprenant des étapes de :
i) application de la composition d'adhésif sensible à la pression selon l'une quelconque des revendications 1-12 en tant que masse fondue sur une surface d'un premier substrat,
ii) le fait de laisser refroidir et se solidifier l'adhésif appliqué,
iii) mise en contact de l'adhésif solidifié avec une surface d'un second substrat et pressage des substrats ensemble sans réchauffer l'adhésif solidifié.

14. Ruban adhésif comprenant une couche de support et une couche d'adhésif composée de la composition d'adhésif sensible à la pression selon l'une quelconque des revendications 1-12.

15. Utilisation de la composition d'adhésif sensible à la pression selon l'une quelconque des revendications 1-12 en tant qu'adhésif d'assemblage, de préférence pour des batteries de véhicules électroniques.
